# EUROPÄISCHE PATENTSCHRIFT

(11) **EP 4 045 267 B1**
(45) Veröffentlichungstag und Bekanntmachung des Hinweises auf die Patenterteilung: **25.09.2024**
(21) Anmeldenummer: 20789533.5
(22) Anmeldetag: 02.10.2020
(51) Int. Cl.: B29C 45/27

(54) **SPRITZGUSSWERKZEUG**
INJECTION MOLDING TOOL
OUTIL DE MOULAGE PAR INJECTION

(30) Priorität: 16.10.2019 DE 102019127960
(43) Veröffentlichungstag der Anmeldung: 24.08.2022
(73) Patentinhaber: Thermoplay S.p.A., 11026 Pont Saint Martin (Aosta) (IT)
(72) Erfinder: MASSARA, Roberto, 10010 Burolo (TO) (IT); GARDA, Genny, 10010 Settimo Vittone (TO) (IT)
(74) Vertreter: Rentsch Partner AG
(86) Internationale Anmeldenummer: PCT/EP2020/077751
(87) Internationale Veröffentlichungsnummer: WO 2021/073905

(56) Entgegenhaltungen:
- EP-A1- 3 321 060
- WO-A1-2008/064458
- JP-A- H05 177 664
- US-A- 4 854 851
- US-A- 5 162 125

## Beschreibung

Die vorliegende Erfindung liegt auf dem Gebiet der Spritzgusswerkzeuge zum Herstellen von Teilen durch Spritzgiessen insbesondere von thermoplastischen Materialien.

### HINTERGRUND DER ERFINDUNG

In Spritzgusswerkzeugen werden Spritzgussdüsen zumindest im Bereich der Düsenspitze durch eine Düsenhülse umgeben. Die Düsenhülse wird an einer Werkzeugplatte des Spritzgusswerkzeuges befestigt. Sie dient dazu, die empfindliche Spritzgussdüse zu schützen und allenfalls thermisch zu isolieren. Je nach Anwendungsfall kann sie zumindest bereichsweise auch mit geschmolzenem Spritzgussmaterial geflutet werden. Die aus dem Stand der Technik bekannten Düsenhülsen sind für die Verkabelung der Heizung, bzw. der Sensoren der Spritzgussdüse nicht optimal. Weiterhin ist es erforderlich, dass für jedes Spritzgusswerkzeug eine spezifische Düsenhülse hergestellt wird.

CN204196176U wurde am 11.03.2015 im Namen von Synventive Molding Solutions (Suzhou) Co., Ltd. veröffentlicht und betrifft eine Düsenhülse zur Wasserkühlung für eine Heißkanaldüse. Die Düsenhülse umfasst einen Düsenhülsenkörper, der die Heißkanaldüse umgibt. Ein erster Dichtungsring und ein zweiter Dichtungsring sind am vorderen Ende bzw. hinteren Ende des Düsenhülsenkörpers umlaufend angeordnet. Ferner ist der ringförmiger Düsenhülsendruckblock durch eine Vielzahl von Schrauben an einer Kavitätenplatte fixiert.

EP1680247A1 wurde am 19.07.2019 im Namen von Husky Injection Molding veröffentlicht und betrifft eine Angussvorrichtung zur Verwendung in einer Formvorrichtung zum Verbinden des Schmelzekanals einer Formmaschinendüse mit einem Kanalsystem einer Formvorrichtung. Die Angussvorrichtung umfasst mehrere Wärmeregler, die mehrere Wärmezonen regeln, die die Länge der Angussvorrichtung zwecks lokaler Temperaturregelung zur Unterstützung eines Formprozesses unterteilen. Die Vielzahl von Zonen kann thermisch reguliert werden, um eine im Wesentlichen leckfreie Verbindung zwischen der Maschinendüse und der Formvorrichtung zu ermöglichen. Die Angussvorrichtung kann einen Isolierkoppler enthalten, der eine erhitzte Angussbuchse im Wesentlichen von der Schlittenkraft isoliert.

WO2008064458A1 wurde am 05.06.2008 ebenfalls im Namen von Husky Injection Molding veröffentlicht und betrifft eine Spritzgussvorrichtung, die einen Heisskanal und eine Form umfasst. Der Heisskanal umfasst dabei mindestens eine Düse, die in einem Düsenaufnahmehohlraum der Form eingreift. Die Spritzgussvorrichtung umfasst ferner eine Düsenhülse, die einen Teil der Düse umgibt und eine Düsenabdichtungsöffnung aufweist, die die Düse aufnimmt. Die Düsenhülse ist beweglich an dem Heisskanal oder der Form befestigt, so dass die Düsenhülse an dem entsprechenden Teil der Spritzgussvorrichtung befestigt bleibt, wenn die Form von dem Heisskanal entfernt wird. Werden die Form und der Heisskanal miteinander in Eingriff gebracht, wird die Düsenhülse durch Federkraft in dichtenden Eingriff mit einer Dichtfläche des Düsenaufnahmehohlraums der Form gedrückt.

JPH05177664A wurde am 20.07.1993 im Namen der Mitsubishi Materials Corp. veröffentlicht und betrifft eine Spritzgussvorrichtung, die ein vorderes Endteil eines Ventilgehäuses umfasst, das auf der Seite eines Anschnitts konisch geformt ist, um in eine konische Öffnung einer Anschnittbuchse eingesetzt zu werden. Ein verjüngender Spalt, der mit einem Schieber in Verbindung steht, ist zwischen der äusseren Umfangsfläche des vorderen Endteils des Ventilgehäuses und der Umfangsfläche der konischen Öffnung angeordnet, wobei ein metallischer O-Ring am mittleren Teil des verjüngenden Spalts angeordnet ist. Dabei tritt ein Harz in den Teil auf der Seite des Schiebers vom metallischen O-Ring im verjüngenden Spalt ein, um eine Harz-Wärmeisolierschicht zu bilden, während auf der gegenüberliegenden Seite des Schiebers vom metallischen O-Ring kein Harz eintritt, und eine Luft-Wärmeisolierschicht gebildet wird.

US5165125A wurde am 10.11.1992 im Namen der Husky Injection Molding veröffentlicht und betrifft eine Spritzgussvorrichtung, die einen Formhohlraum, eine Einlassleitung für geschmolzenen Kunststoff, welche mit dem Formhohlraum in Verbindung steht, und einen Kanal in der Einlassleitung zum Befördern von geschmolzenem Kunststoff in den Formhohlraum umfasst. Ferner sind in der an den Formhohlraum angrenzenden Einlassleitung getrennte Heiz- und Kühlvorrichtungen angebracht, um die Temperatur des geschmolzenen Kunststoffs in dem an den Formhohlraum angrenzenden Kanal zu steuern.

### ZUSAMMENFASSUNG DER ERFINDUNG

Eine Aufgabe der Erfindung besteht darin ein Spritzgusswerkzeug mit einer im Vergleich zum Stand der Technik verbesserten Düsenhülse zu zeigen.

Im Vergleich zum Stand der Technik, weisen das Spritzgusswerkzeug und eine damit wirkverbundene Düsenhülse mit Vorteil einen wie folgt beschriebenen Aufbau auf.

Das Spritzgusswerkzeug umfasst eine Düsenplatte, welche eine durch diese in einer axialen Richtung hindurchführende erste Durchgangsbohrung aufweist. Diese verläuft in der Regel senkrecht von einer ersten Plattenfläche zu einer zu dieser im Wesentlichen sich parallel erstreckenden zweiten Plattenfläche. In dieser ist der hintere Teil einer Spritzgussdüse in axialer Richtung verlaufend angeordnet. Üblicherweise weisst die Düsenplatte mehrere erste Durchgangsbohrungen auf, in welchen entsprechend Spritzgussdüsen angeordnet sind.

Des Weiteren umfasst das Spritzgusswerkzeug eine Kavitätenplatte, welche mindestens eine erste Kavitätenhälfte aufweist, welche im geschlossenen Zustand des Spritzgusswerkzeugs mit einer zweiten Kavitätenhälfte in einer weiteren Kavitätenplatte eine Kavität bildet. In diese wird während dem Spritzgiessvorgang durch eine Auslassöffnung der Spritzgussdüse geschmolzenes Material zur Herstellung eines Teils in die Kavität eingespritzt.

Die Kavitätenplatte weist eine durch diese hindurchführende zweite Durchgangsbohrung auf, welche zur ersten Durchgangsbohrung koaxial angeordnet ist und in die erste Kavitätenhälfte mündet. Diese verläuft in der Regel senkrecht von einer ersten Plattenfläche zu einer zu dieser im Wesentlichen sich parallel erstreckenden zweiten Plattenfläche in welcher die erste Kavitätenhälfte angeordnet ist. In der zweiten Durchgangsbohrung ist der vordere Teil der Spritzgussdüse in axialer Richtung verlaufend angeordnet. Üblicherweise weisst die Düsenplatte mehrere zweite Durchgangsbohrungen auf, in welchen entsprechend Spritzgussdüsen angeordnet sind.

Die Spritzgussdüsen verlaufen üblicherweise von der ersten Durchgangsbohrung in die zweite Durchgangsbohrung. In der zweiten Durchgangsbohrung ist jeweils eine Düsenhülse angeordnet, welche im montierten Zustand die Spritzgussdüse zumindest im vorderen Bereich umschliesst. Die Düsenhülse weist im Bereich des kavitätenseitigen Endes eine Öffnung auf, durch welche die Auslassöffnung der Spritzgussdüse während dem Spritzgiessen mit der ersten Kavitätenhälfte kommuniziert.

Im Unterschied zum Stand der Technik wird die Düsenhülse über ein Wirkverbindungsmittel mit der Kavitätenplatte und/oder Düsenplatte zumindest in axialer Richtung wirkverbunden. Die Düsenhülse und das Wirkverbindungsmittel sind mit Vorteil zweiteilig und voneinander lösbar ausgebildet. Zur Erhöhung der Kompatibilität mit unterschiedlichen Einbausituationen, kann das Wirkverbindungsmittel über eine normierte Schnittstelle mit der Düsenhülse wirkverbunden werden. Das Wirkverbindungsmittel kann unterschiedliche Ausgestaltungen annehmen.

Wie nachfolgend näher beschrieben, können mit einer Flanschplatte oder einer Gewindehülse als Wirkverbindungsmittel gute Resultate erzielt werden, insbesondere wenn diese in unterschiedlicher Richtung wirkverbindbar sind. Ein Vorteil dieses Aufbaus besteht in einer gewissen Modularität der verwendeten Bauteile, welche damit für unterschiedlichen Einbausituationen geeignet sein können. In Abhängigkeit von der Ausgestaltung der Kavitätenplatte und der Düsenplatte und der vorhandenen jeweiligen Durchgangsbohrungen kann für die zur Verwendung vorgesehenen Spritzgussdüse eine passende Düsenhülse und ein passendes Wirkverbindungsmittel zusammengestellt werden.

Dadurch, dass sich die Düsenhülse nicht wesentlich in die Düsenplatte hinein erstrecken muss, besteht der Vorteil, dass ein Kabelkanal zwischen der Düsenplatte und einer benachbarten Kavitätenplatte angeordnet sein kann, in welchem z.B. eine Verkabelung einer Düsenheizung und/oder eines im Bereich der Spritzgussdüse angeordneten Sensors verläuft. Je nach Ausgestaltung kann der Kabelkanal in der Kavitätenplatte und/oder der Düsenplatte verlaufen. Eine Anordnung der Verkabelung in einem zwischen den Platten angeordneten Kabelkanal hat den Vorteil, dass die Verkabelung dadurch vor äusseren Einflüssen geschützt angeordnet werden kann.

Mit Vorteil ist das Wirkverbindungsmittel zur Verbindung der Düsenhülse mit der Düsen- und/oder Kavitätenplatte zwischen der Düsenplatte und der Kavitätenplatte angeordnet.

Nachfolgend werden eine nicht abschliessende Auswahl von möglichen Wirkverbindungsmitteln näher beschrieben. Gemäss der vorliegenden Erfindung umfasst das Wirkverbindungsmittel eine Flanschplatte. Diese weist eine zentrale Öffnung auf, in welcher die Düsenhülse im montierten Zustand angeordnet ist. Die Flanschplatte wird dabei mittels einer oder mehrerer Schrauben an der Düsenplatte und/oder der Kavitätenplatte in axialer Richtung befestigt. Alternativ umfasst das Wirkverbindungsmittel gemäss vorliegender Erfindung eine Gewindehülse mit einer zentralen Öffnung, in welcher die Düsenhülse im montierten Zustand angeordnet ist. Die Gewindehülse wird über eine Gewindeverbindung mit der Düsenplatte und/oder der Kavitätenplatte in axialer Richtung verschraubt.

Zur Erhöhung der Flexibilität kann das Wirkverbindungsmittel so ausgestaltet sein, dass es in zwei Orientierungen mit der zentralen Öffnung auf die Düsenhülse aufschiebbar ist. Mit anderen Worten, die Gewindehülse bzw. die Flanschplatte kann auf die Düsenhülse in Längsrichtung aufgeschoben werden. Dabei kann die Gewindehülse bzw. die Flanschplatte je nachdem ob diese mit der Düsenplatte oder der Kavitätenplatte verbunden werden soll in einer ersten Orientierung, oder in einer um 180 Grad um eine Querachse gedrehte Orientierung auf die Düsenhülse in Längsrichtung aufgeschoben werden. Das bedeutet, dass die Gewindehülse in der ersten Orientierung mit der Kavitätenplatte und in der alternativen zweiten Orientierung mit der Düsenplatte verbunden werden kann. So kann dieselbe Kombination von Spritzgussdüse, Düsenhülse und Wirkverbindungsmittel verscheiden angeordnet werden und ist dadurch in verschieden aufgebauten Spritzgusswerkzeugen einbaubar.

Zur Herstellung einer Wirkverbindung von Düsenhülse und Wirkverbindungsmittel kann das Wirkverbindungsmittel eine erste Anschlagfläche und die Düsenhülse eine zweite Anschlagfläche aufweisen. Diese Anschlagflächen verhindern vorteilhafterweise im montiertem Zustand eine Verschiebung der Düsenhülse gegenüber der Kavitätenplatte und/oder Düsenplatte entgegen der Richtung des Schmelzflusses. Der bei der Produktion herrschende Druck auf ein kavitätenseitiges Ende der Düsenhülse kann über die Anschlagsflächen auf das Wirkverbindungsmittel übertragen werden und von diesem kompensiert werden. Vorzugsweise verhindert ein Sicherungsmittel, welches im montierten Zustand mit der Düsenhülse zusammenwirkt und verhindert eine Verschiebung der Düsenhülse gegenüber dem Wirkverbindungsmittel in Richtung des Schmelzflusses. Durch das Zusammenwirken von Wirkverbindungsmittel und Sicherungsmittel wird die Düsenhülse zumindest in axialer Richtung gegenüber Kavitätenplatte und/ oder Düsenplatte gehalten und/ oder positioniert. Gute Ergebnisse können erzielt werden, wenn das Sicherungsmittel zumindest eines der folgenden Elemente umfasst: Sprengring, Gewindemutter.

Je nach Ausgestaltung der Düse ist die Düsenhülse in Richtung des Schmelzflusses im Querschnitt zumindest in einem Abschnitt verjüngend ausgebildet. Sie kann zudem einen Sitz für das kavitätenseitige Ende der Spritzgussdüse aufweisen, so dass sie im montierten Zustand zumindest unterstützend als Halterung für die eingesetzte Spritzgussdüse dient.

Bei Bedarf kann die Düsenhülse ein erstes Dichtmittel aufweisen, welches im montierten Zustand mit einer Innenfläche der zweiten Durchgangsbohrung dichtend zusammenwirkt. Für gewöhnlich ist das erste Dichtmittel an einer Aussenseite der Düsenhülse angeordnet. Ein ungewolltes Austreten von geschmolzenem Material in axialer Richtung zwischen Düsenhülse und der Kavitätenplatte kann durch ein entsprechend ausgestaltetes erstes Dichtmittel unterbunden werden. Je nach Anwendung kann ein dementsprechend ausgestaltetes erstes Dichtmittel zum Abdichten eines Kühlkanals dienen, wie weiter unten beschrieben. Gute Resultate werden erzielt, wenn das erste Dichtmittel zumindest eines der folgenden Elemente umfasst: umlaufender Wulst mit Dichtfläche, O-Ring, etc. Bevorzugt ist das erste Dichtmittel in Längsrichtung der Düsenhülse in einem Bereich von 20% bis 80% zwischen dem kavitätenseitigen Ende der Düsenhülsen und der zweiten Anschlagfläche angeordnet. In der Regel dichtet das erste Dichtmittel in radialer Richtung bezüglich einer Innenfläche der zweiten Durchgangsbohrung ab. Bei Bedarf kann unterhalb des ersten ein zweites Dichtmittel zwischen der Düsenhülse und einer Innenfläche der zweiten Durchgangsbohrung und/ oder der Spritzgussdüse angeordnet sein. Bevorzugt ist das zweite Dichtmittel im Bereich eines sich verjüngend ausgebildeten Abschnittes der Düsenhülse angeordnet. Das zweite Dichtmittel wirkt mit Vorteil in axialer Richtung mit einem verjüngend ausgebildeten Abschnitt der zweiten Durchgangsbohrung zusammen. Gute Resultate werden erzielt, wenn das zweite Dichtmittel zumindest eines der folgenden Elemente umfasst: umlaufender Wulst mit Dichtfläche, O-Ring, etc.

Je nach Anwendungsgebiet und Ausgestaltung, weist die Düsenhülse ein drittes Dichtmittel auf, welches im Bereich der Auslassöffnung der Spritzgussdüse zwischen dem kavitätenseitigen Ende der Spritzgussdüse und der Düsenhülse angeordnet ist und mit der Spritzgussdüse dichtend zusammenwirkt.

Bei einer aktiv gekühlten Ausführungsform kann ein um die Düsenhülse umlaufender Hohlraum zwischen dem ersten und dem zweiten Dichtmittel Teil eines Kühlmittelkanals sein, dessen Zu- und Ableitung mit Vorteil in der Kavitätenplatte angeordnet ist.

Die Düsenhülse ist mit Vorteil im Wesentlichen rotationssymmetrisch um ihre Längsachse ausgebildet. Bei Bedarf kann die Düsenhülse über eine Verdrehsicherung gegenüber der Kavitätenplatte in Umfangsrichtung gegen ungewolltes Verdrehen abgestützt sein.

Anhand der in den nachfolgenden Figuren gezeigten Ausführungsbeispiele und der dazugehörigen Beschreibung werden Aspekte der Erfindung näher erläutert. Es zeigt:
- Fig. 1: eine perspektivische Ansicht eine erste Variation eines erfindungsgemässen Spritzgusswerkzeugs mit einem Ausschnitt, welcher den inneren Aufbau zeigt;
- Fig. 2: eine vergrösserte Darstellung des Ausschnitts aus Fig. 1, der in dieser mit D gekennzeichnet ist;
- Fig. 3: eine erste Variation einer erfindungsgemässen Düsenhülse mit einer ersten Variation eines Wirkverbindungsmittels in einer Explosionsdarstellung;
- Fig. 4: die Düsenhülse mit dem Wirkverbindungsmittel von Fig. 3, welches in einer weiteren Orientierung auf die Düsenhülse aufgeschoben ist, mit einem Ausschnitt, welcher den inneren Aufbau darstellt;
- Fig. 5: die Düsenhülse von Fig. 3 mit einer zweiten Variation eines Wirkverbindungsmittels in einer Explosionsdarstellung;
- Fig. 6: die Düsenhülse von Fig. 3 mit der zweiten Variation des Wirkverbindungsmittels von Fig. 5, welches in einer weiteren Orientierung auf die Düsenhülse aufgeschoben ist, mit einem Ausschnitt, welcher den inneren Aufbau darstellt;
- Fig. 7: eine perspektivische Schnittdarstellung einer zweiten Variation eines Spritzgusswerkzeugs mit einer zweiten Variation der Düsenhülse; und
- Fig. 8: eine perspektivische Ansicht der ersten Variation des Spritzgusswerkzeugs von Fig. 1 in einer Explosionsdarstellung mit der Düsenhülse und dem Wirkverbindungsmittel von Fig. 3.

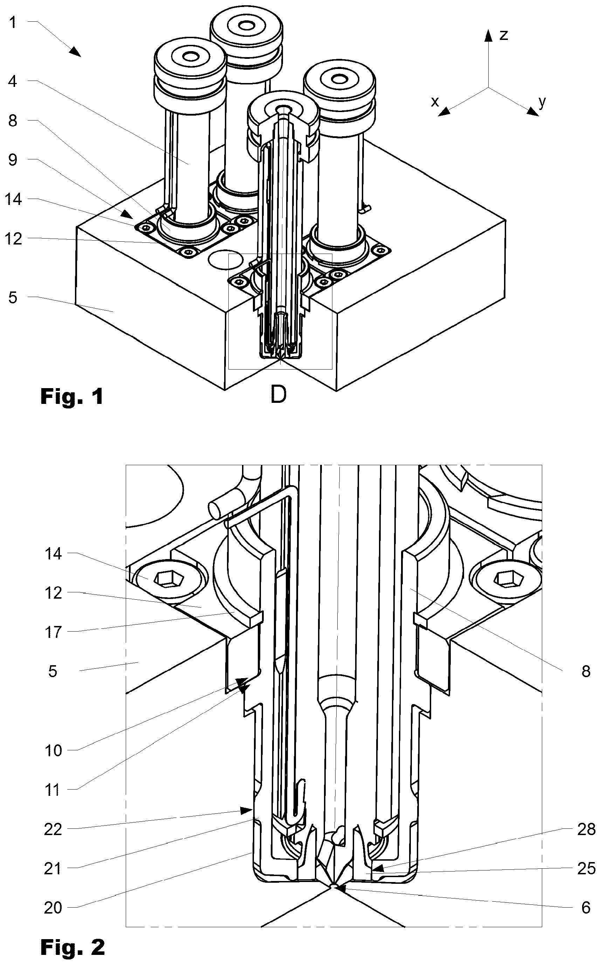

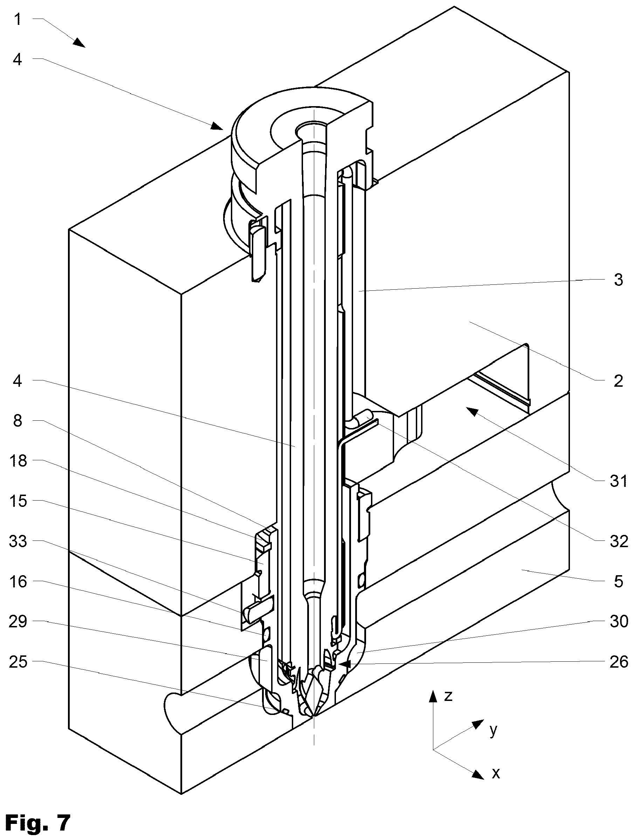

**Figuren 1, 2****,** und **8** zeigen eine erste Variation eines erfindungsgemässen Spritzgusswerkzeugs 1. Das Spritzgusswerkzeug 1 umfasst eine Düsenplatte 2, wie sie in **Figur 7** zu sehen ist, welche eine durch diese in einer axialen Richtung (z-Richtung) hindurchführende erste Durchgangsbohrung 3 aufweist. Des Weiteren umfasst das Spritzgusswerkzeug 1 eine Kavitätenplatte 5, diese weisst mindestens eine Kavitätenhälfte 6 auf, in welche eine in der Kavitätenplatte 5 angeordnete und durch diese hindurchführende zweite Durchgangsbohrung 7 mündet. Die zweite Durchgangsbohrung 7 ist zur ersten Durchgangsbohrung 3 koaxial angeordnet. In der ersten Durchgangsbohrung 3 ist in axialer Richtung z verlaufend eine Spritzgussdüse 4 angeordnet ist. Die Spritzgussdüse 4 verläuft ferner von der ersten Durchgangsbohrung 3 in die zweite Durchgangsbohrung 7. In der zweiten Durchgangsbohrung 7 ist eine erste Variation einer Düsenhülse 8 angeordnet abgebildet, welche im montierten Zustand die Spritzgussdüse 4 zumindest bereichsweise umschliesst, wie in den **Figuren 1, 2** zu sehen ist.

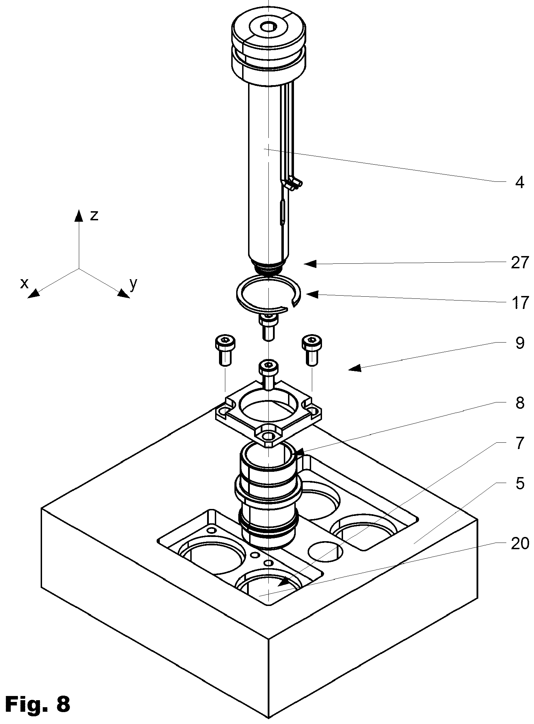

In **Figur 1** und **8** ist eine Variation der Kavitätenplatte 5 zu sehen, in welcher mehrere zweite Durchgangsbohrungen 7 angeordnet sind. Die Kavitätenplatte 5 und die Düsenplatte 2 grenzen im montierten Zustand, welcher in **Figur 7** gezeigt ist, in einer Ebene xy senkrecht zur axialen Richtung z aneinander. Dabei wird in einigen Varianten von der Kavitätenplatte 5 und der Düsenplatte 2 ein dazwischenliegender Kabelkanal 31 begrenzt. In **Figur 7** ist der Kabelkanal 31 zu sehen, welcher in der Düsenplatte 3 verläuft. In diesem Kabelkanal 31 ist eine Verkabelung 32 für beispielsweise die Düsenheizung der Spritzgussdüse 4 verlegt.

**Figuren 1, 2****,** **7** und **8** zeigen verschiedene Ausführungen des Spritzgusswerkzeugs 1 bzw. der Düsenhülse 8, welche über ein Wirkverbindungsmittel 9 mit der Kavitätenplatte 5 oder Düsenplatte 2 wirkverbunden ist. Dabei ist das Wirkverbindungsmittel 9 zwischen der Düsenplatte 2 und der Kavitätenplatte 5 angeordnet. Ferner sind die Düsenhülse 8 und das Wirkverbindungsmittel 9 zumindest in axialer Richtung z miteinander wirkverbunden.

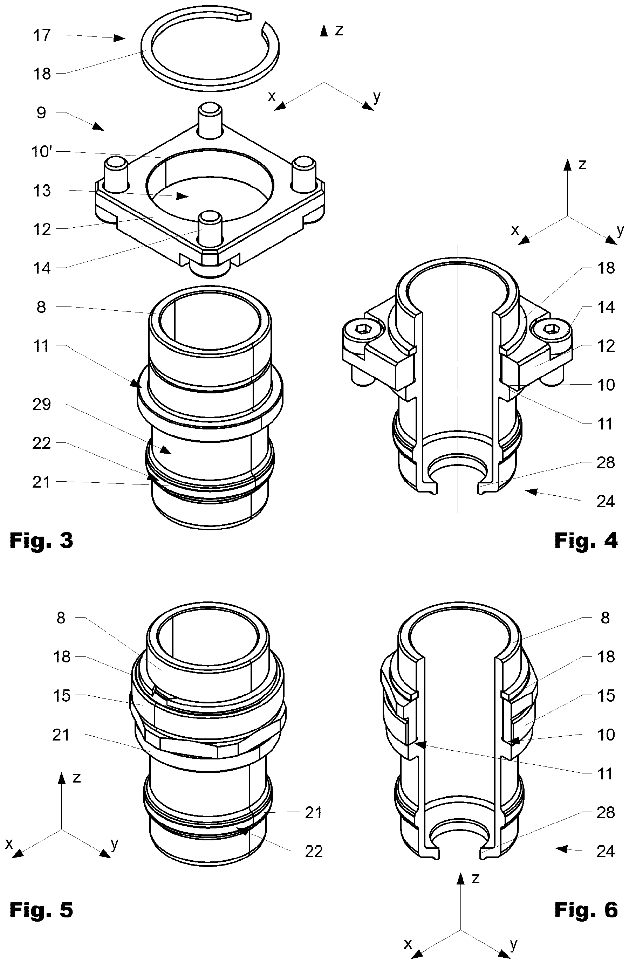

In den **Figuren 3** bis **6** ist eine erste Variation der Düsenhülse 8 mit verschiedenen Ausführungen des Wirkverbindungsmittels 9 gezeigt. In den **Figuren 3** und **4** handelt es sich beim Wirkverbindungsmittel 9 um eine Flanschplatte 12. Diese weist eine zentrale Öffnung 13 auf, in welcher die Düsenhülse 8 im montierten Zustand angeordnet ist. Die Flanschplatte 12 ist in den dargestellten Variationen mittels mehrerer Schrauben 14 an der Düsenplatte 2 oder der Kavitätenplatte 5 in axialer Richtung z befestigt. In den **Figuren 5** und **6** handelt es sich beim Wirkverbindungsmittel 9 um eine Gewindehülse 15. Diese weist eine zentrale Öffnung 13 auf, in welcher die Düsenhülse 8 im montierten Zustand angeordnet ist. Die Gewindehülse 15 ist mit der Düsenplatte 2 oder der Kavitätenplatte 5 in axialer Richtung z mittels einer Gewindeverbindung befestigt.

Zur Herstellung einer Wirkverbindung von Düsenhülse 8 und Wirkverbindungsmittel 9 weist das Wirkverbindungsmittel 9 eine erste Anschlagfläche 10 und die Düsenhülse 8 eine zweite Anschlagfläche 11 auf. Diese Anschlagsflächen 10, 11 verhindern im montiertem Zustand eine Verschiebung der Düsenhülse 8 gegenüber der Kavitätenplatte 5 und/ oder Düsenplatte 2 entgegen der Richtung des Schmelzflusses (-z). Ein Sicherungsmittel 17, das im montierten Zustand mit der Düsenhülse 8 zusammenwirkt, verhindert eine Verschiebung der Düsenhülse 8 gegenüber dem Wirkverbindungsmittel 9 in Richtung des Schmelzflusses (-z). Bei den gezeigten Variationen umfasst das Sicherungsmittel 17 einen Sprengring 18. Durch das Zusammenwirken von Wirkverbindungsmittel 9 und Sicherungsmittel 17 wird die Düsenhülse 8 zumindest in axialer Richtung z gegenüber Kavitätenplatte 5 und/ oder Düsenplatte 2 gehalten und/ oder positioniert.

In den **Figuren 5** und **6****,** sowie den **Figuren 3** und **4** sind jeweils dieselben Bauteile abgebildet, jedoch ist das Wirkverbindungsmittel 9 in zwei verschiedenen Orientierungen auf die Düsenhülse 8 aufgeschoben, sodass das Wirkverbindungsmittel 9 mit der Kavitätenplatte 5 oder der Düsenplatte 2 verbunden werden kann.

In den **Figuren 1, 2****,** **4** und **6** bis **8,** ist zu erkennen, dass die Düsenhülse 8 in Richtung des Schmelzflusses (-z) im Querschnitt zumindest in einem Abschnitt verjüngend ausgebildet ist. Ferner weist die Düsenhülse 8 einen Sitz 26 für das kavitätenseitigen Ende der Spritzgussdüse 4 auf. Hierdurch fungiert die Düsenhülse 8 im montierten Zustand als Positionierhilfe, Schutz und Halterung für die eingesetzte Spritzgussdüse 4. Die Düsenhülse weist darüber hinaus ein erstes Dichtmittel 16 auf, welches im montierten Zustand mit einer Innenfläche 20 der zweiten Durchgangsbohrung 7 dichtend zusammenwirkt. Das erste Dichtmittel ist dabei an einer Aussenfläche 29 der Düsenhülse 8 angeordnet und umfasst einen umlaufenden Wulst 21 mit einer ersten Dichtfläche 22. Alternativ umfasst das erste Dichtmittel 16 einen O-Ring, wie in **Figur 7** dargestellt ist. Das erste Dichtmittel 16 ist in Längsrichtung z der Düsenhülse 8 in einem Bereich von 20% bis 80% zwischen dem kavitätenseitigen Ende 24 der Düsenhülsen 8 und der zweiten Anschlagfläche 11 angeordnet.

In den **Figuren 2** und **7** ist jeweils eine Variation eines zweiten Dichtmittels 25 zu sehen, welches im montierten Zustand zwischen der Düsenhülse 8 und einer Innenfläche 20 der zweiten Durchgangsbohrung 7 und/ oder der Spritzgussdüse 4 angeordnet ist. Dabei ist das zweite Dichtmittel 25 im Bereich des verjüngend ausgebildeten Abschnitts der Düsenhülse 8 angeordnet. Die **Figuren 2****,** **4****,** **6** und **7** zeigen eine Düsenhülse 8 mit einem dritten Dichtmittel 28 welches im Bereich der Auslassöffnung der Spritzgussdüse 4 zwischen dem kavitätenseitigen Ende 27 der Spritzgussdüse 4 und der Düsenhülse 8 angeordnet ist und mit der Spritzgussdüse 4 dichtend zusammenwirkt. In den dargestellten Variationen umfasst das dritte Dichtmittel 28 eine umlaufende Dichtfläche, welche mit der Spritzgussdüse 4 umlaufend kontaktiert.

**Figur 7** zeigt eine perspektivische Schnittdarstellung einer zweiten Variation eines Spritzgusswerkzeugs 1 mit einer aktiv gekühlten zweiten Ausführungsform der Düsenhülse 8. Ein um die Düsenhülse 8 umlaufender Hohlraum zwischen dem ersten und dem zweiten Dichtmittel 16, 25 ist Teil eines Kühlmittelkanals 30, dessen Zu- und Ableitung in der Kavitätenplatte angeordnet sind. Ferner wird Teil des Kühlmittelkanals 30 von einer Innenfläche 20 der zweiten Durchgangsbohrung 7 und eine Aussenfläche 29 der Düsenhülse 8 begrenzen.

Die **Figuren 3** bis **6** zeigen eine um ihre Längsachse rotationssymmetrische Düsenhülse 8. Das Spritzgusswerkzeug 1 umfasst jedoch in Variationen eine Verdrehsicherung 33, welche mit der Düsenhülse 8 und dem Wirkverbindungsmittel 9 und/ oder der Düsenplatte 2 und/ oder der Kavitätenplatte 5 zusammenwirkt und eine Drehung der Düsenhülse 8 um die axiale Richtung z beziehungsweise um ihre Längsachse verhindert. Dies ist in **Figur 7** dargestellt.

### LISTE DER BEZUGSZEICHEN

- 1: Spritzgusswerkzeug
- 2: Düsenplatte
- 3: Erste Durchgangsbohrung
- 4: Spritzgussdüse
- 5: Kavitätenplatte
- 6: Kavitätenhälfte
- 7: Zweite Durchgangsbohrung
- 8: Düsenhülse
- 9: Wirkverbindungsmittel
- 10: Erste Anschlagfläche
- 11: Zweite Anschlagfläche
- 12: Flanschplatte
- 13: Zentrale Öffnung (Wirkverbindungsmittel)
- 14: Schrauben
- 15: Gewindehülse
- 16: Erstes Dichtmittel (Düsenhülse)
- 17: Sicherungsmittel
- 18: Sprengring
- 20: Innenfläche (zweite Durchgangsbohrung)
- 21: Wulst
- 22: Erste Dichtfläche
- 24: Kavitätenseitiges Ende / Düsenhülsenspitze
- 25: Zweites Dichtmittel
- 26: Sitz
- 27: Kavitätenseitiges Ende der Spritzgussdüse 4
- 28: Drittes Dichtmittel
- 29: Aussenfläche (Düsenhülse)
- 30: Kühlmittelkanal
- 31: Kabelkanal
- 32: Verkabelung
- 33: Verdrehsicherung

## Patentansprüche

1. Spritzgusswerkzeug (1) mit
a. einer Düsenplatte (2), welche eine erste Durchgangsbohrung (3) in einer axialen Richtung (z) aufweist, in welcher eine Spritzgussdüse (4) in axialer Richtung (z) verlaufend angeordnet ist, und
b. einer Kavitätenplatte (5), welche mindestens eine Kavitätenhälfte (6) aufweist in welche eine in der Kavitätenplatte (5) angeordnete zweite Durchgangsbohrung (7) mündet, welche zur ersten Durchgangsbohrung (3) koaxial angeordnet ist, wobei
c. in der zweiten Durchgangsbohrung (7) eine Düsenhülse (8) angeordnet ist, welche im montierten Zustand die Spritzgussdüse (4) zumindest bereichsweise umschliesst, wobei
d. die Düsenhülse (8) über ein Wirkverbindungsmittel (9) mit der Kavitätenplatte (5) und/ oder Düsenplatte (2) wirkverbunden ist, wobei
e. die Düsenhülse (8) und das Wirkverbindungsmittel (9) zumindest in axialer Richtung (z) miteinander wirkverbunden sind,
**dadurch gekennzeichnet, dass**
f. das Wirkverbindungsmittel (9) eine Flanschplatte (12) umfasst, welche eine zentrale Öffnung (13) aufweist, in welcher die Düsenhülse (8) angeordnet ist, wobei die Flanschplatte (12) mittels einer oder mehreren Schrauben (14) an der Düsenplatte (2) und/oder der Kavitätenplatte (5) in axialer Richtung (z) befestigt ist, oder eine Gewindehülse (15) umfasst, welche eine zentrale Öffnung (13) aufweist, in welcher die Düsenhülse (8) angeordnet ist, wobei die Gewindehülse (15) über eine Gewindeverbindung mit der Düsenplatte (2) und/oder der Kavitätenplatte (5) in axialer Richtung (z) verschraubt ist.

2. Spritzgusswerkzeug (1) gemäss Patentanspruch 1, **dadurch gekennzeichnet, dass** das Wirkverbindungsmittel (9) zwischen der Düsenplatte (2) und der Kavitätenplatte (5) angeordnet ist.

3. Spritzgusswerkzeug (1) gemäss einem der vorangehenden Patentansprüche, **dadurch gekennzeichnet, dass** das Wirkverbindungsmittel (9) in zwei Orientierungen relativ zur Düsenhülse (8) mit der zentralen Öffnung (13) auf die Düsenhülse (8) aufschiebbar ist.

4. Spritzgusswerkzeug (1) gemäss einem der vorangehenden Patentansprüche, **dadurch gekennzeichnet, dass** das Wirkverbindungsmittel (9) eine erste Anschlagfläche (10) und die Düsenhülse (8) eine zweite Anschlagfläche (11) aufweist, welche in montiertem Zustand eine Verschiebung der Düsenhülse (8) gegenüber der Kavitätenplatte (5) entgegen der Richtung des Schmelzflusses (-z) verhindert.

5. Spritzgusswerkzeug (1) gemäss einem der vorangehenden Patentansprüche, **dadurch gekennzeichnet, dass** ein Sicherungsmittel (17) im montierten Zustand mit der Düsenhülse (8) zusammenwirkt und eine Verschiebung der Düsenhülse (8) gegenüber dem Wirkverbindungsmittel (9) in Richtung des Schmelzflusses (-z) verhindert.

6. Spritzgusswerkzeug (1) gemäss Patentanspruch 5, **dadurch gekennzeichnet, dass** das Sicherungsmittel (17) zumindest eines der folgenden Elemente umfasst: Sprengring (18), Gewindemutter.

7. Spritzgusswerkzeug (1) gemäss einem der vorangehenden Patentansprüche, **dadurch gekennzeichnet, dass** die Düsenhülse (8) ein erstes Dichtmittel (16) aufweist, welches im montierten Zustand mit einer Innenfläche (20) der zweiten Durchgangsbohrung (7) dichtend zusammenwirkt.

8. Spritzgusswerkzeug (1) gemäss Patentanspruch 7, **dadurch gekennzeichnet, dass** das erste Dichtmittel (16) zumindest eines der folgenden Elemente umfasst: umlaufender Wulst (21) mit einer ersten Dichtfläche (22), O-Ring.

9. Spritzgusswerkzeug (1) gemäss Patentanspruch 7 oder 8, **dadurch gekennzeichnet, dass** das erste Dichtmittel (16) in Längsrichtung (z) der Düsenhülse (8) in einem Bereich von 20% bis 80% zwischen dem kavitätenseitigen Ende (24) der Düsenhülsen (8) und der zweiten Anschlagfläche (11) angeordnet ist.

10. Spritzgusswerkzeug (1) gemäss einem der Patentansprüche 7 bis 9, **dadurch gekennzeichnet, dass** ein zweites Dichtmittel (25) im montierten Zustand zwischen der Düsenhülse (8) und einer Innenfläche (20) der zweiten Durchgangsbohrung (7) und/ oder der Spritzgussdüse (4) angeordnet ist.

11. Spritzgusswerkzeug (1) gemäss einem der vorangehenden Patentansprüche, **dadurch gekennzeichnet, dass** die Düsenhülse (8) in Richtung des Schmelzflusses (-z) im Querschnitt zumindest in einem Abschnitt verjüngend ausgebildet ist.

12. Spritzgusswerkzeug (1) gemäss einem der vorangehenden Patentansprüche, **dadurch gekennzeichnet, dass** die Düsenhülse (8) einen Sitz (26) für das kavitätenseitigen Ende (27) der Spritzgussdüse (4) aufweist.

13. Spritzgusswerkzeug (1) gemäss Patentanspruch 12, **dadurch gekennzeichnet, dass** die Düsenhülse (8) ein drittes Dichtmittel (28) umfasst, welches zwischen dem kavitätenseitigen Ende (27) der Spritzgussdüse (4) und der Düsenhülse (8) angeordnet ist und mit der Spritzgussdüse (4) dichtend zusammenwirkt.

14. Spritzgusswerkzeug (1) gemäss einem der vorangehenden Patentansprüche 10 bis 13, **dadurch gekennzeichnet, dass** zwischen dem ersten Dichtmittel (16) und dem zweiten Dichtmittel (25) eine Innenfläche (20) der zweiten Durchgangsbohrung (7) und eine Aussenfläche (29) der Düsenhülse (8) einen Teil eines Kühlmittelkanals (30) begrenzen.

15. Spritzgusswerkzeug (1) gemäss einem der vorangehenden Patentansprüche, **dadurch gekennzeichnet, dass** von der Düsenplatte (2) und der Kavitätenplatte (5) ein dazwischen angeordneter Kabelkanal (31) begrenzt wird, durch welchen eine Verkabelung (32) für die Spritzgussdüse (4) geführt wird.

16. Spritzgusswerkzeug (1) gemäss einem der vorangehenden Patentansprüche, **dadurch gekennzeichnet, dass** eine Verdrehsicherung (33) mit der Düsenhülse (8) und dem Wirkverbindungsmittel (9) und/ oder der Düsenplatte (2) und/ oder der Kavitätenplatte (5) zusammenwirkt und eine Drehung der Düsenhülse (8) um die axiale Richtung (z) verhindert.

## Claims

1. Injection molding tool (1) with
a. a nozzle plate (2), which has a first through bore (3) in an axial direction (z), in which an injection molding nozzle (4) is arranged extending in the axial direction (z), and
b. a cavity plate (5), which has at least a cavity half (6) into which a second through bore (7) arranged in the cavity plate (5) is led to, which is arranged coaxially to the first through bore (3), wherein
c. a nozzle sleeve (8) is arranged in the second through bore (7), which in the assembled state encloses the injection molding nozzle (4) at least in certain regions, wherein
d. the nozzle sleeve (8) is interconnected with the cavity plate (5) and/or nozzle plate (2) via an interconnection means (9), wherein
e. the nozzle sleeve (8) and the interconnection means (9) are interconnected at least in the axial direction (z),
**characterized in that**
f. the interconnection means (9) comprises a flange plate (12) which has a central opening (13) in which the nozzle sleeve (8) is arranged, the flange plate (12) being fastened to the nozzle plate (2) and/or the cavity plate (5) in the axial direction (z) by means of one or more screws (14), or comprises a threaded sleeve (15) which has a central opening (13) in which the nozzle sleeve (8) is arranged, the threaded sleeve (15) being screwed to the nozzle plate (2) and/or the cavity plate (5) in the axial direction (z) via a threaded connection.

2. Injection molding tool (1) according to patent claim 1, **characterized in that** the interconnection means (9) is arranged between the nozzle plate (2) and the cavity plate (5).

3. Injection molding tool (1) according to one of the preceding patent claims, **characterized in that** the interconnection means (9) can be pushed onto the nozzle sleeve (8) in two orientations relative to the nozzle sleeve (8) with the central opening (13).

4. Injection molding tool (1) according to one of the preceding patent claims, **characterized in that** the interconnection means (9) has a first stop surface (10) and the nozzle sleeve (8) has a second stop surface (11) which, in the assembled state, prevents displacement of the nozzle sleeve (8) relative to the cavity plate (5) counter to the direction of the melt flow (-z).

5. Injection molding tool (1) according to one of the preceding claims, **characterized in that** a securing means (17) interacts with the nozzle sleeve (8) in the assembled state and prevents displacement of the nozzle sleeve (8) relative to the interconnection means (9) in the direction of the melt flow (-z).

6. Injection molding tool (1) according to patent claim 5, **characterized in that** the securing means (17) comprises at least one of the following elements: snap ring (18), threaded nut.

7. Injection molding tool (1) according to one of the preceding patent claims, **characterized in that** the nozzle sleeve (8) has a first sealing means (16) which, in the assembled state, interacts in a sealing manner with an inner surface (20) of the second through bore (7).

8. Injection molding tool (1) according to patent claim 7, **characterized in that** the first sealing means (16) comprises at least one of the following elements: circumferential bead (21) with a first sealing surface (22), O-ring.

9. Injection molding tool (1) according to patent claim 7 or 8, **characterized in that** the first sealing means (16) is arranged in the longitudinal direction (z) of the nozzle sleeve (8) in a range of 20% to 80% between the cavity-side end (24) of the nozzle sleeves (8) and the second stop surface (11).

10. Injection molding tool (1) according to one of the patent claims 7 to 9, **characterized in that** a second sealing means (25) is arranged in the assembled state between the nozzle sleeve (8) and an inner surface (20) of the second through bore (7) and/or the injection molding nozzle (4).

11. Injection molding tool (1) according to one of the preceding patent claims, **characterized in that** the nozzle sleeve (8) is designed to be tapered in cross-section at least in one section in the direction of the melt flow (-z).

12. Injection molding tool (1) according to one of the preceding patent claims, **characterized in that** the nozzle sleeve (8) has a seat (26) for the cavity-side end (27) of the injection molding nozzle (4).

13. Injection molding tool (1) according to patent claim 12, **characterized in that** the nozzle sleeve (8) comprises a third sealing means (28) which is arranged between the cavity-side end (27) of the injection molding nozzle (4) and the nozzle sleeve (8) and interacts with the injection molding nozzle (4) in a sealing manner.

14. Injection molding tool (1) according to one of the preceding patent claims 10 to 13, **characterized in that** between the first sealing means (16) and the second sealing means (25) an inner surface (20) of the second through bore (7) and an outer surface (29) of the nozzle sleeve (8) delimit a part of a coolant channel (30).

15. Injection molding tool (1) according to one of the preceding patent claims, **characterized in that** the nozzle plate (2) and the cavity plate (5) delimit a cable duct (31) arranged therebetween, through which a wiring (32) for the injection molding nozzle (4) is guided.

16. Injection molding tool (1) according to one of the preceding patent claims, **characterized in that** an anti-rotation device (33) interacts with the nozzle sleeve (8) and the interconnection means (9) and/or the nozzle plate (2) and/or the cavity plate (5) and prevents rotation of the nozzle sleeve (8) about the axial direction (z).

## Revendications

1. Outil de moulage par injection (1) comprenant
a. une plaque à buses (2), qui présente un premier trou traversant (3) dans une direction axiale (z), dans lequel une buse de moulage par injection (4) est arrangée de manière à s'étendre dans la direction axiale (z), et
b. une plaque à cavités (5), qui présente au moins une moitié de cavité (6) dans laquelle débouche un deuxième trou traversant (7) disposé dans la plaque à cavités (5), lequel est arrangé coaxialement au premier trou traversant (3), dans lequel
c. dans le deuxième trou traversant (7) est disposée une douille de buse (8) qui, à l'état monté, entoure au moins par zones la buse de moulage par injection (4), dans lequel
d. la douille de buse (8) est interconnectée par un moyen d'interconnexion (9) avec la plaque à cavités (5) et/ou la plaque de buse (2), dans lequel
e. e. la douille de buse (8) et le moyen d'interconnexion (9) sont inter-connectés au moins dans la direction axiale (z),
**caractérisé en ce que**
f. le moyen d'interconnexion (9) comprend une plaque à bride (12) qui présente une ouverture centrale (13) dans laquelle est arrangée la douille de buse (8), la plaque à bride (12) étant fixée au moyen d'une ou de plusieurs vis (14) à la plaque de buse (2) et/ou à la plaque à cavités (5) dans la direction axiale (z), ou comprend une douille filetée (15) qui présente une ouverture centrale (13) dans laquelle est arrangée la douille de buse (8), la douille filetée (15) étant vissée par une liaison filetée avec la plaque de buse (2) et/ou la plaque de cavité (5) dans la direction axiale (z).

2. Outil de moulage par injection (1) selon la revendication 1, **caractérisé en ce que** le moyen d'interconnexion (9) est arrangé entre la plaque de buse (2) et la plaque de cavité (5).

3. Outil de moulage par injection (1) selon l'une des revendications précédentes, **caractérisé en ce que** le moyen d'interconnexion (9) peut être enfilé sur la douille de buse (8) dans deux orientations par rapport à la douille de buse (8) avec l'ouverture centrale (13).

4. Outil de moulage par injection (1) selon l'une des revendications précédentes, **caractérisé en ce que** le moyen d'interconnexion (9) présente une première surface de butée (10) et la douille de buse (8) une deuxième surface de butée (11) qui, à l'état monté, empêche un déplacement de la douille de buse (8) par rapport à la plaque à cavités (5) dans le sens inverse du flux de matière fondue (-z).

5. Outil de moulage par injection (1) selon l'une des revendications précédentes, **caractérisé en ce qu'**un moyen de sécurité (17) coopère avec la douille de buse (8) à l'état monté et empêche un déplacement de la douille de buse (8) par rapport au moyen d'interconnexion (9) dans la direction du flux de matière fondue (-z).

6. Outil de moulage par injection (1) selon la revendication 5, **caractérisé en ce que** le moyen de sécurité (17) comprend au moins l'un des éléments suivants: jonc d'arrêt (18), écrou fileté.

7. Outil de moulage par injection (1) selon l'une des revendications précédentes, **caractérisé en ce que** la douille de buse (8) présente un premier moyen d'étanchéité (16) qui, à l'état monté, coopère de manière étanche avec une surface intérieure (20) du deuxième trou traversant (7).

8. Outil de moulage par injection (1) selon la revendication 7, **caractérisé en ce que** le premier moyen d'étanchéité (16) comprend au moins l'un des éléments suivants : bourrelet périphérique (21) avec une première surface d'étanchéité (22), joint torique.

9. Outil de moulage par injection (1) selon la revendication 7 ou 8, **caractérisé en ce que** le premier moyen d'étanchéité (16) est arrangé dans la direction longitudinale (z) de la douille de buse (8) dans une plage de 20% à 80% entre l'extrémité côté cavité (24) des douilles de buse (8) et la deuxième surface de butée (11).

10. Outil de moulage par injection (1) selon l'une des revendications 7 à 9, **caractérisé en ce qu'**un deuxième moyen d'étanchéité (25) est disposé à l'état monté entre la douille de buse (8) et une surface intérieure (20) du deuxième trou traversant (7) et/ou de la buse de moulage par injection (4).

11. Outil de moulage par injection (1) selon l'une des revendications précédentes, **caractérisé en ce que** la douille de buse (8) est conçue de manière à se rétrécir en section transversale dans la direction du flux de matière fondue (-z) au moins dans une section.

12. Outil de moulage par injection (1) selon l'une des revendications précédentes, **caractérisé en ce que** la douille de buse (8) présente un siège (26) pour l'extrémité (27) de la buse de moulage par injection (4) située du côté de la cavité.

13. Outil de moulage par injection (1) selon l'une des revendications précédentes, **caractérisé en ce que** la douille de buse (8) comprend un troisième moyen d'étanchéité (28) qui est disposé entre l'extrémité (27) côté cavité de la buse de moulage par injection (4) et la douille de buse (8) et qui coopère de manière étanche avec la buse de moulage par injection (4).

14. Outil de moulage par injection (1) selon l'une des revendications précédentes 10 à 13, **caractérisé en ce qu'**entre le premier moyen d'étanchéité (16) et le deuxième moyen d'étanchéité (25), une surface intérieure (20) du deuxième trou traversant (7) et une surface extérieure (29) de la douille de buse (8) délimitent une partie d'un canal de réfrigérant (30).

15. Outil de moulage par injection (1) selon l'une des revendications précédentes, **caractérisé ence que** la plaque à buses (2) et la plaque à cavités (5) délimitent un canal de câbles (31) arrangé entre elles, à travers lequel est guidé un câblage (32) pour la buse de moulage par injection (4).

16. Outil de moulage par injection (1) selon l'une des revendications précédentes, **caractérisé en ce qu'**un dispositif anti-rotation (33) coopère avec la douille de buse (8) et le moyen d'interconnexion (9) et/ou la plaque de buse (2) et/ou la plaque de cavité (5) et empêche une rotation de la douille de buse (8) autour de la direction axiale (z).
